(19) **Europäisches Patentamt / European Patent Office / Office européen des brevets**

(11) **EP 3 990 207 B1**

(12) **EUROPEAN PATENT SPECIFICATION**

(45) Date of publication and mention of the grant of the patent:
**02.08.2023 Bulletin 2023/31**

(21) Application number: **20743840.9**

(22) Date of filing: **27.06.2020**

(51) International Patent Classification (IPC):
**B23K 9/04** *(2006.01)*   **B21J 5/00** *(2006.01)*
**B21J 9/02** *(2006.01)*   **B23K 103/04** *(2006.01)*
**B23K 103/10** *(2006.01)*

(52) Cooperative Patent Classification (CPC):
**B23K 9/042; B21J 5/002; B21J 9/02;**
B23K 2103/05; B23K 2103/10

(86) International application number:
**PCT/IB2020/056100**

(87) International publication number:
**WO 2020/261233 (30.12.2020 Gazette 2020/53)**

(54) **SYSTEM FOR HOT FORGING WIRE AND ARC ADDITIVE MANUFACTURING**

SYSTEM ZUR WARMSCHMIEDENDEN GENERATIVEN FERTIGUNG MIT DRAHT UND LICHTBOGEN

SYSTÈME DESTINÉ À LA FABRICATION ADDITIVE PAR FORGEAGE À CHAUD AU FIL ET À L'ARC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 PT 2019115611**

(43) Date of publication of application:
**04.05.2022 Bulletin 2022/18**

(73) Proprietor: **Universidade Nova de Lisboa**
**1099-085 Lisboa (PT)**

(72) Inventors:
• **GOMES SANTOS, Telmo Jorge**
**2829-516 Caparica (PT)**
• **REBELO DUARTE, Valdemar**
**2829-516 Caparica (PT)**

• **ANDRÉ RODRIGUES, Tiago Miguel**
**2829-516 Caparica (PT)**
• **SOUSA OLIVEIRA, João Pedro**
**2829-516 Caparica (PT)**
• **MENDES MIRANDA, Rosa Maria**
**2829-516 Caparica (PT)**

(74) Representative: **Lourenço Martinho do Rosário, Ana Margarida**
**Gastão Cunha Ferreira**
**Rua dos Bacalhoeiros, 4**
**1100-070 Lisboa (PT)**

(56) References cited:
**WO-A1-2019/084430    CN-A- 107 584 118**
**CN-A- 109 530 880    CN-B- 106 825 348**
**US-A1- 2003 094 259**

## Description

### Scope of the invention

The present invention generally refers to the field of manufacture of workpieces or articles from a metallic wire, more specifically to the field of forming an object by layer additive manufacturing.

### Framework of the invention

Additive manufacturing (AM) is a manufacturing process that is able to produce a functional complex part, layer by layer, without moulds or dies or cutting tools. This process uses a heat source such as a laser, an electron beam or an electric arc to melt a controlled amount of metal, which can be in the form of metallic powder or wire. After melting, the metal is then deposited, initially, on a base plate. Subsequent layers are then built up upon each preceding layer. As opposed to conventional machining processes, this computer-aided manufacturing (CAM) technology builds completely functional parts or, alternatively, builds features on existing components, by adding material rather than by removing it.

Currently known AM manufacturing techniques include: Laser Metal Deposition, Laser Powder Bed, and Wire and Arc technologies.

Laser Powder Bed technology uses a laser to melt metallic powder contained in a powder bed. Wire and Arc technology, instead of using a laser as a heat source and metallic powder as the incremental material, uses an electric arc as heat source to melt a feedstock material in the form of a wire (eg. 0,8 - 1,2 mm diameter).

In this invention, during Wire and Arc Additive Manufacturing (WAAM) the material is viscoplastic deformed at elevated temperatures immediately after its deposition. During the deposition of a subsequent layer, the previous solidified structures recrystallizes refining the grain.

### Summary of the invention

Due to its similitude with hot forging, the equipment and the method of the present invention is named Hot Forging Wire and Arc Additive Manufacturing (HF-WAAM).

In order to prove the concept and the advantages of the equipment of the invention, samples in AISI 316L stainless steel were manufactured and tested. Forging forces of 17 N and 55 N were used to plastically deform the material. Optical microscopy was performed for microstructural characterization.

The present invention refers to an equipment and a method to refine the solidification microstructure and reduce anisotropy without interrupting the additive manufacturing process, by performing a local viscoplastic deformation of the layers already deposited as the material is being deposited.

This equipment and method, furthermore, greatly affect porosity: pores formed during the process were eliminated by the hot forging process. Since deformation occurs at high temperature, the forces involved are low and the equipment does not need specific requirements, such as stiffness. Therefore, the equipment costs are lowered. This equipment can be easily incorporated into conventional moving equipment used in WAAM, either a 6-axis robot or a 3-axis table.

### Background of the invention

WAAM principals are based on those of multiple pass welding and its metallurgy and, thus, the [4,5] microstructure of the parts have coarse grain structures [2] as a consequence of the successive re-melting and solidification thermal cycles. Aside from a large grain size, mechanical resistance is low and anisotropic, which under multi-axial tensile or cyclical solicitations, premature failure of the component can occur.

Another potential detrimental feature is the formation of pores [3]. In this case, the existence of porosity in parts that are to be used in structural applications can be critical since, depending on their volume fraction and location, a significant decrease in mechanical properties may be observed. This is also a major concern for non-destructive testing (NDT) [4,5], which may not assure the detection of these defects morphology.

The existence of both large grain structures and porosity has motivated the search to find methods to minimize, or even avoid, these microstructural features. One way to simultaneously decrease grain size and porosity is through the application of pressure between each deposited layer. Colegrove et al. [6] first applied interpass cold rolling during each deposited layer. To achieve an effective grain refinement, a load between 50 kN and 75 kN needed to be applied, since rolling was just applied when the material was almost at room temperature (≈50°C), and cold plastic deformation was intended to create a hardening effect on the material. When the next layer is deposited, the heat transferred to the previously deformed material induce recrystallization of the grain structure. Though this method is effective in reducing the grain size and collapsing pores that may exist within deposited layer [3], it is time-consuming, since it is necessary to wait for the material to cool down before rolling. Moreover, this method implies the production of an entirely different additive manufacturing (AM) equipment with high structural stiffness. This impairs the use of an ordinary welding source plus a robot or an XYZ table, increasing the costs of the process, making it less competitive.

Several state of the art documents were found that refer to additive manufacturing systems and methods.

Documents WO2016092253 and WO2019084430 refer to equipment and methods which use hammers to perform a local plastic deformation of the layers already deposited after the material has been deposited. However, differently from the equipment of the invention, the hammer(s) is(are) linearly aligned with the welding tip, which precludes non-linear deposition and the need for higher impact forces to deform the material.

Mention should also be made to the document EP3266543 which presents an equipment that moulds the material immediately after deposition.

**Advantages of the invention**

The present invention refers to a WAAM equipment and method that achieves the effect referred to in the previous paragraph, while avoiding the need for long waiting times between deposited layers and reducing the load required for deforming the material by performing a locally viscoplastic deformation of already deposited layers right after the material is deposited. The hot forging occurs at the same time as the deposition of the layer. Such process would resemble semi-solid forging [7]. By deforming the as-deposited layer at high temperature, it is possible to induce dynamic recrystallization of the material and promote the collapse of pores that may have been formed during deposition. These two features can be achieved at a fraction of the required load if the deformation was to be performed at low temperatures, i.e., near room temperature.

The presence of recrystallized grains in WAAM parts has obvious advantages: first, it can increase the mechanical strength following the Hall-Petch relationship; then, the existence of these refined grains at the top of the deposited layer provides a higher density of nucleation sites, decreasing the susceptibility for massive grain growth as observed in WAAM deposits. Another potential advantage of deforming the as-deposited layers at high temperature is the possibility to improve waviness and surface roughness, increasing part accuracy and reducing material waste upon subsequent machining processes.

In one embodiment of the equipment of the invention the hammer is axisymmetric to the heat source. The hammer surrounds the welding tip and the welding tip is inside it. The welding tip moves jointly with the hammer. Therefore, the distance from the hammer to the welding tip is less than 0,03 m, while in other equipments the distance ranges from 0,1 m to 0,15 m.

Due to the short distance between the welding tip and the hammer, the time between the deposition of the material and the impact of the hammer is very short allowing for the material to be at a temperature between 50% and almost 100% of the melting point, that is, the material is still in a semi-liquid, viscoplastic or solid state, when the impact of the hammer occurs. This means that the force that the hammer needs to apply in order to deform the material is much less than in other equipments, where the time between the deposition of the material and the impact of the hammer is longer and the force that the hammer needs to apply in order to deform the material is about 75.000 N. Since the force that the hammer needs to apply in order to deform the material is less than 200 N, the energy consumed is almost negligible, which is an additional valuable benefit.

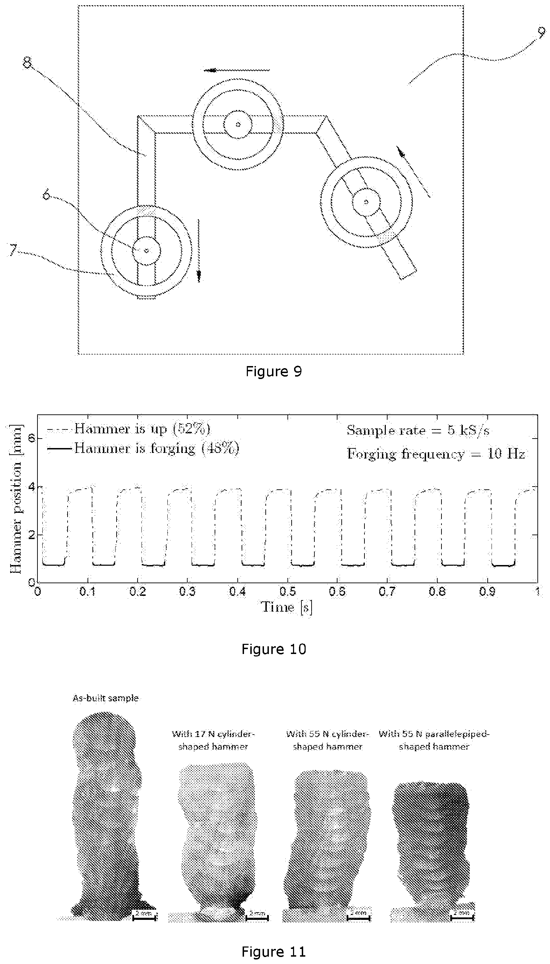

Another advantage of the equipment of invention, is related with the ability of the hammer to forge nonlinear deposition paths since the forged area can run along 360°, which makes the forging action independent of the torch moving direction, as depicted in figure 9. As the hammer surrounds the welding tip, whichever direction the welding tip moves, part of the hammer will always be aligned with the deposited material. In other equipments, such as the previously mentioned documents, as the hammer(s) is(are) linearly aligned with the welding tip, nonlinear depositions cannot be performed without an additional degree of freedom of the robot or XYZ table and the consequent complexity of AM trajectory code.

Therefore, it is possible to decrease the production time while improving the microstructure of the material.

Another advantage is that the equipment on the invention may be incorporated into conventional moving equipment used in WAAM, either a 6 axis robot or a 3 axis table. Since deformation occurs at high temperature, the hot forging forces involved are low and the equipment can be less stiff if compared to cold forging variant [11], thus the hot forging variant can be incorporated into conventional moving equipment used in WAAM, such as XYZ table or conventional 6 axis robot arms.

**Brief description of drawings**

These and other characteristics can be easily understood through the attached figures, which should be regarded as mere examples and not restrictive in any way of the scope of the invention. In figures, and for illustrative purposes, the dimensions of some of the elements may be exaggerated and not scaled. The absolute dimensions and relative dimensions do not correspond to the real relationships for the realization of the invention.

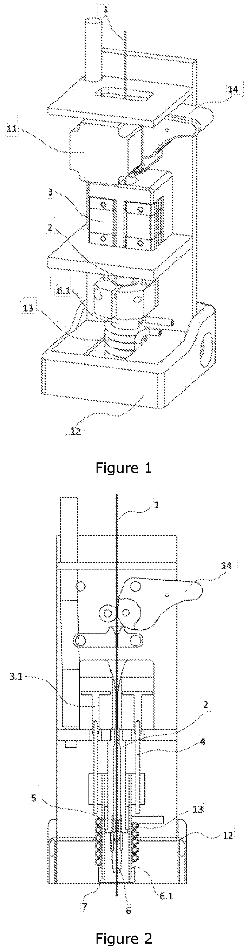

Figure 1 presents a perspective view of the equipment of the invention.

Figure 2 presents a schematic section view of the equipment.

Figure 3 presents a perspective view of a detail of the equipment with the hammer inside the welding tip shell.

Figure 4 presents a schematic section view of a detail of the equipment with the hammer inside the welding tip shell.

Figure 5 presents a perspective view of a detail of the equipment with the hammer outside the welding tip shell.

Figure 6 presents a schematic section view of a detail of the equipment with the hammer outside the welding tip shell.

Figure 7 presents a perspective view of a detail of the equipment where the hammer is embedded at the welding tip shell.

Figure 8 presents a schematic section view of a detail of the equipment where the hammer is embedded at the welding tip shell.

Figure 9 presents a schematic representation of the circular hammer forging at 360°.

Figure 10 an example of the position-time of hammer during deposition for a frequency of 10 Hz.

Figure 11 presents a cross sections of the samples produced with shielding gas, with different hammer shapes and different forging forces.

Figure 12 presents results of the height and width of each sample referred in figure 11.

Figure 13a presents a micrograph of the sample as-built.

Figure 13b presents a micrograph of the sample hot forged with 17 N cylinder-shaped hammer.

Figure 13c presents a micrograph of the sample hot forged with 55 N cylinder-shaped hammer.

Figure 13d presents a micrograph of the sample hot forged with 55 N parallelepiped-shaped hammer.

Figure 14 presents a micrograph with identification of microstructure development.

Figure 15 presents primary and secondary dentrite arm spacing measured in each sample.

Figure 16 presents a micrograph showing the grain growth discontinuity in the hot forged samples.

Figure 17 presents porosity observation for:

    a) 17 N forging;
    b) 55 N forging;
    c) 55 N forging with reduced area.

The figures show the elements and components of the equipment of the present invention:

1 -    Wire
2 -    Main conductor
3 -    Actuator chassis
3.1 -    Actuator
4 -    Connector
5 -    Main electrical insulator

5.1 -     Secondary electrical insulator
6 -      Welding tip
6.1 -     Welding tip shell
7 -      Hammer
8 -      Workpiece
9 -      Substrate
10 -     Material conveyor
11 -     Motor
12 -     Extractor hood
13 -     Cooling system
14 -     Wire feeder

## Detailed description of the invention

By "Additive Manufacturing (AM)" is meant the additive processes that may be used to produce functional, complex objects, layer by layer, without moulds or dies e.g. by providing material (e.g. metal or plastic) typically in the form of a powder or a wire, and, using a heat source such as a laser beam, electron beam or an electric, or plasma welding arc, melting an amount of that material and depositing the melted material (e.g. on a substrate/work piece), and subsequently building layers of material upon each preceding layer.

By "Wire and Arc Additive Manufacturing (WAAM)" it is meant the additive technology based on wire + arc welding processes, used in the production of a three-dimensional object.

By "Hot Forging Wire and Arc Additive Manufacturing (HF-WAAM)" it is meant the equipment and the method of the present invention.

By "immediately after" it is meant that the time interval is less than 5 s.

Nowadays, most equipments working on WAAM, are usually a 6-axis robot arm, with conventional welding torches attached. Conventional welding torches were initially designed for welding and to be used by an operator. Ergonomic and safety concerns exist and so power, shielding gas and wire are fed through the same hose.

With these design constraints, conventional welding torches are unpractical for WAAM applications. In order to solve this problem, the equipment of the invention is designed to be perfectly adapted to work coupled to a robot arm.

The method referred to in the present invention allows reducing the load and the forging tooling, as well as, the equipment stiffness.

Referring to the figures, the present invention refers to an equipment intended to melt metal wire using an electric arc as the heat source, more specifically to a WAAM equipment and its method of operation, based on hot forging between deposited layers. The main objective of the process of the present invention is to take advantage of the viscoplastic deformation behaviour at high temperatures, which allows reducing residual stresses, increasing ductility, eliminating post-heating treatment operations and homogenizing the grain structure.

The equipment of the invention comprises: a heat source configured to apply heat to a portion of a surface of a workpiece sufficient to melt said portion, the heat source being further configured to move relative to the workpiece; a material delivery means configured to add material to the melted portion; cooling means configured to cool the formed layer to bring at least part of the layer to a solid (crystalline) state, thereby producing a modified workpiece; and a controllable forging treatment tool, actuated by a vibrating actuator, configured to hot forging the workpiece so as to plastically deform the part layer. In a further aspect, the present invention provides a computer readable medium having computer-executable instructions adapted to cause Additive Manufacturing apparatus to operate in accordance with the method of any of the above aspects.

The present invention also provides a method of forming an object by additive layer manufacturing. The method comprises: a) applying, by a heat source, heat to a portion of a surface of a workpiece sufficient to melt said portion; b) adding material to the melted portion and moving the heat source relative to the workpiece whereby progressively to form a layer of material on the workpiece; c) cooling the formed layer to bring at least part of the layer to a state of crystallisation, thereby producing a modified workpiece; and d) using a controllable forging treatment tool to hot forging the workpiece so as to plastically deform the part layer. Steps a) to d) are repeated as required in order to form the intended object.

The actuator (3.1) can be electromagnetic, for example, a solenoid, or mechanical, for example, a pneumatic cylinder, and can operate at different forging frequencies. The hammer (7) travels along with the main conductor (2) and is activated while the material is still being deposited, so the workpiece (8) can be forged at temperatures between 50% and almost 100% of the melting point, above the recrystallization temperature, similar to a hot forging process, but where deformation and solidification occurs.

Certain elementary electrical precautions must be considered in order to not disturb the material deposition. The hammer (7) and the welding tip shell (6.1) are electrically isolated from both the main conductor (2) (typically with positive electrical polarity) and the workpiece (8) (typically with negative electrical polarity) through the electrical insulators (5) (5.1) and the actuator chassis (3). Additionally, the hammer (7) is electrically connected to the main conductor (+) through a high electrical resistance. Thus, when the hammer (7) is lifted but remains very close to the WAAM part, its electrical potential is the same as that of the main conductor (+), thereby avoiding arc ignition between the two. In addition, the high electric resistance also avoids the current flow from the workpiece (8) to the hammer (7) when a short circuit is established due to the contact between them.

The equipment of the invention comprises an additive manufacturing device and a controllable forging treatment tool, embedded in the additive manufacturing device. The additive manufacturing device is used to form a target object layer-by-layer, specifically comprising a substrate (9), a material conveyor (10), and comprises a main conductor (2), a welding tip (6) surrounded by a welding tip shell (6.1), a material conveyor (10) where the wire (1) travels through from the wire feeder (14) to the welding tip (6), a motor (11) that powers the wire feeder (14), a cooling system (13) and an extractor hood (12) located at the bottom of the equipment and surrounding the additive manufacturing device to extract the fumes generated during the process of melting. The extractor hood is internally divided into multiple channels that are connected to an extractor fan.

The substrate (9) is used to support the workpiece (8) being formed. The material conveyor (10) is used to feed wire (1) to the workpiece (8) being formed. In the present embodiment, the wire (1) is a metal or alloy wire, for example a 316L stainless steel wire or an aluminium wire. The main conductor (2) is used as an electrical conductor to provide an electric arc that, when the wire (1) is sent to the workpiece (8) through the welding tip (6), causes the energy beam to be directed toward the workpiece (8) and melt both the workpiece and the wire, whereby the molten material rapidly solidifies to form a solidified portion and become part of the object being formed. The controllable forging treatment tool is movable jointly with the material conveyor (10) and impacts the deposited layer of the workpiece (8) for forging the formed solidified simultaneously with the material conveyor(10).

The cooling system (13), in the form of a cooling coil using a cooling fluid and surrounding the welding tip shell (6.1), is used to cool the welding tip shell (6.1) and the hammer (7) which promotes the cooling of the shielding gas and thus the workpiece (8).

The controllable forging treatment tool comprises at least one actuator (3.1), inside the actuator chassis (3), which transmit movement to the hammer (7) through the connector (4) that connects the actuator (3.1) to the hammer (7).

When the at least one actuator (3.1) is activated, the set consisting of the hammer (7), the cooling system (13), the welding tip shell (6.1), the connector (4) and the at least one actuator (3.1), moves jointly in the vertical direction, describing an alternating upward and downward movements with a stroke less than 0,015 m at a vibration frequency between 1 and 30 Hz.

In one embodiment of the equipment of the invention, the main conductor (2) is axisymmetric to the welding tip (6) that is placed inside the welding tip shell (6.1).

In one embodiment of the equipment of the invention, the hammer (7) has a circular crown geometry concentric with the welding tip (6).

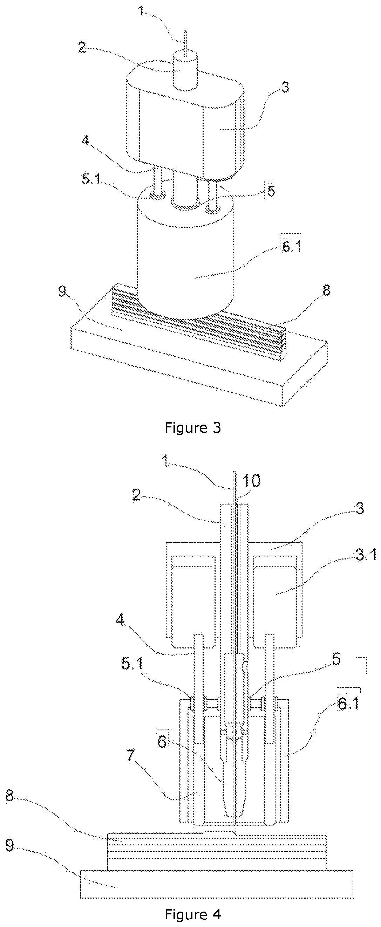

Referring to figures 3 and 4, in a first embodiment of the equipment of the invention, the controllable forging treatment tool of the present invention comprises the use of a hammer (7) placed inside the welding tip shell (6.1).

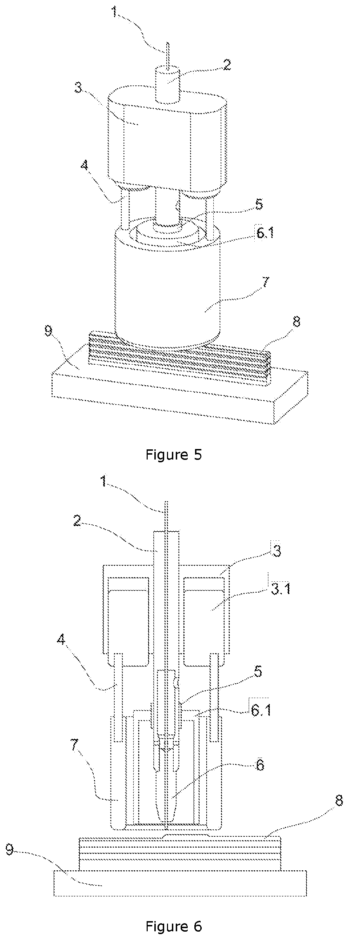

Referring to figures 5 and 6, in a second embodiment of the equipment of the invention, the controllable forging treatment tool of the present invention comprises the use of a hammer (7) placed outside the welding tip shell (6.1).

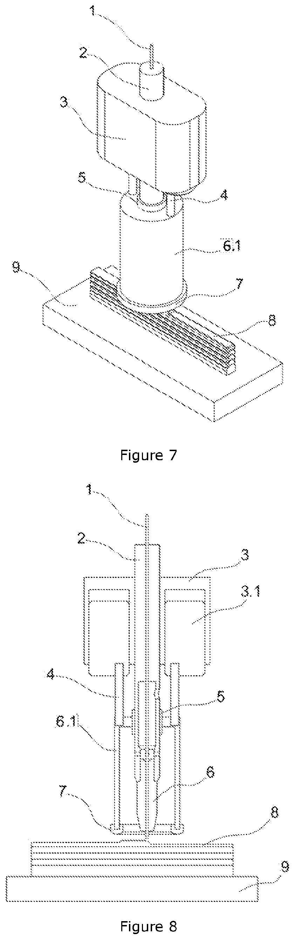

Referring to figures 7 and 8, in a third embodiment of the equipment of the invention, the controllable forging treatment tool of the present invention comprises the use of a hammer (7) placed on the welding tip shell (6.1).

All these embodiments enable the hammer (7) to forge nonlinear deposition paths since the forged area can run along 360°, which makes the forging action independent of the torch moving direction, as depicted in figure 9. As the hammer (7) surrounds the welding tip (6), whichever direction the welding tip (6) moves, part of the hammer (6) will always be aligned with the deposited material.

The bottom surface of the hammer (7) (the surface that interacts with the WAAM part) can be removable or fixed, and is not restricted to a flat surface, it can take varied shapes that may be useful to improve the forging process. The shape of the hammer can assume multiple geometries, provided that they are suitable for forging, and may be selected from the group of shapes: rectangular, chisel-shaped, L-shaped, recessed, circular, or polygonal.

The number of actuators (3.1) is not limited, and various actuators (3.1) can be used simultaneously.

HF-WAAM introduces an additional set of process parameters that may influence the final metallurgic, mechanic and geometric properties of the workpiece (8). These are:

- forging force, $F_F$ [N];
- forging frequency, $f_F$ [Hz];
- distance to arc centre, DAC [m];
- hammer geometry.

The area forged in each cycle depends on the bottom surface geometry of the hammer (7) and on the forging step $F_s$ [m], which is the space travelled by the hammer between each stroke/period. This value is a function of the forging frequency $F_F$ and travel speed $V_{deposition}$ [m/s] and can be calculated based on:

$$F_s = \frac{1}{f_F} \times V_{deposition} \quad (1)$$

For a circular crown-shaped hammer (7), the forging step must be below the hammer (7) thickness, avoiding un-forged areas between steps.

In order to identify the applied pressure, it is necessary to know the forged area on each cycle. For this particular geometry, the forged area is calculated by the equations:

$$A = F_s \times l_w \quad (2)$$

$$l_w = \frac{2\pi R_m \times 2\beta}{360} \quad (3)$$

$$\beta = \sin^{-1}\left(\frac{W}{2R_m}\right) \quad (4)$$

Where:

$A$ [mm$^2$] - forged area
$R_m$ [m] - hammer radius
$l_w$ [m] - arc length
W [m] - bead width
$\beta$ [°] - angle of half the arc length

Experimental examples

The equipment of the invention is attached to a moving head within a working envelope of 2,76 $\times$ 1,96 $\times$ 2 m. A power source was used to deposit a 0,001 m diameter AISI316L steel onto a mild steel substrate. Two pneumatic cylinders were used as actuators (3.1), a first pneumatic cylinder with a produced force of 17 N at 6 bar and a second pneumatic cylinder with a produced force of 55 N at 6 bar. Both pneumatics were connected to the hammer (7) through the connector (4). An air solenoid valve controlled by a Data acquisition (DAQ) device was used to actuate the pneumatic cylinders.

The length of the workpieces (10) was fixed at 0, 1 m and a fixed time lapse between depositions of 2 min. A one-way deposition strategy with the torch returning always to the same starting point was adopted.

Four samples were produced to study the effect of HF-WAAM, one as-built sample and three samples with a forging force of 17 N, 55 N and 55 N with a different hammer (7) geometry. The first two hot forged samples were produced with a cylinder-shaped hammer (7) with a diameter of 0,01 m and the last one with a parallelepiped-shaped hammer (7) with a contact area of 0,003 m by 0,009 m. To prove its effectiveness in reducing the number of pores, the same samples were reproduced without shielding gas. The process parameters used to deposit and deform the material are shown in Table 1.

Table 1 - Process parameters

| Welding mode | Gas metal arc welding - continuous mode (DC+) |
|---|---|
| Number of layers | 10 |
| Forging frequency | 10 Hz |
| Distance to arc centre | 0,014 m |
| Wire feed speed | 4 m/min |
| Travel speed | 0,36 m/min |
| Voltage | 20 V DC |

(continued)

| Welding mode | Gas metal arc welding - continuous mode (DC+) |
|---|---|
| Contact tip to work distance | 0,006 m |
| Shielding gas | Argon 99,99% |
| Gas flow rate | 12 l/min |

An electrical circuit was set up to evaluate the intermittent contact between the hammer (7) and the workpiece (9) during the process. The circuit uses a power source, for instance a 9 V battery, to create a current loop and to make the hammer (7) acting as a switch when it contacts with the workpiece (8). Therefore, using a Data Acquisition (DAQ) device to measure the power source voltage it is possible to identify the contact period (short-circuit/low voltage) and the non-contact one (open circuit/maximum voltage). Figure 10 depicts the record of the hammering effect during a time interval of 1 s, which confirms the 10 Hz hammering frequency and a duty cycle of about 48%.

A thermographic infrared camera is used to monitor the temperature of the workpieces (8) and the hammer (7) during the process of forming the object.

The characterization of the object produced focused on the geometric and microstructural features between the different applied loads and the as-built specimens. Therefore, three different cross-sections of each sample were cut, polished and etched with an adequate reagent. The metallographic analysis was conducted using an inverted optical microscope.

The effect of hot forging is visible in the macrographs depicted in figure 11 of the cross-sections removed from each sample built with shielding gas. It is visible that the hammer (7) has a profound impact on the bead geometry, as it flatness the layers along its length, decreasing the need for parametric correction inline. With hot forging, the layers became larger and thinner when increasing the forging forces, and this is particularly visible for the sample built with the rectangular hammer. This is explained by the reduced contact area of the rectangular hammer ($2,7 \times 10^{-5}$ m$^2$) compared to the circular one ($7,85 \times 10^{-5}$ m$^2$). By reducing the contact area, the stress increases, as well as, the deformation. Another observation is the flattening effect of the last deposited layer that assists the deposition of a subsequent one.

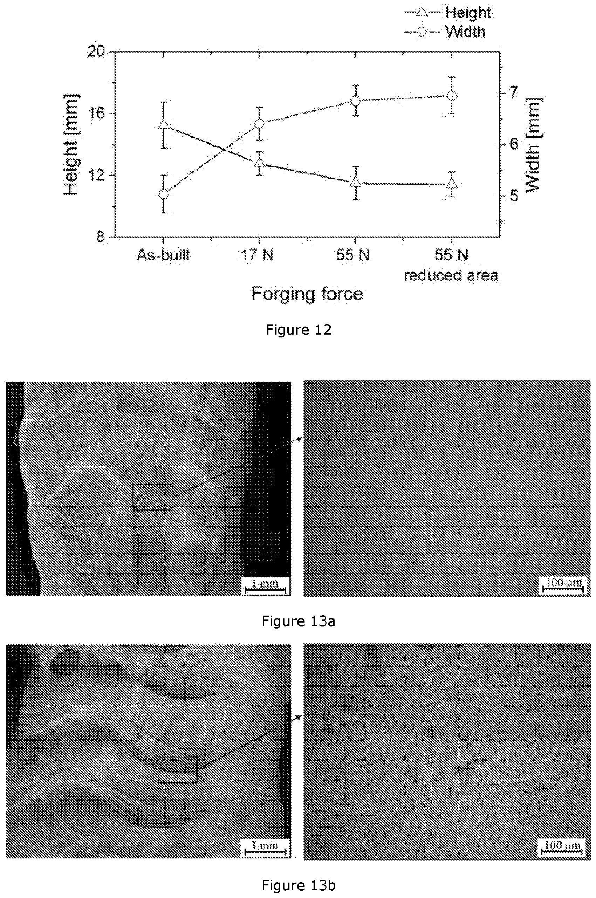

The results of the measurements of width and height along each object were performed and the respective average and standard deviation values are shown in figure 12. The object dimensions are compared to the control specimen. The height of the object decreases when increasing the forging force and, due to the volume conservation in the plastic domain, the opposite occurs to the width of the samples.

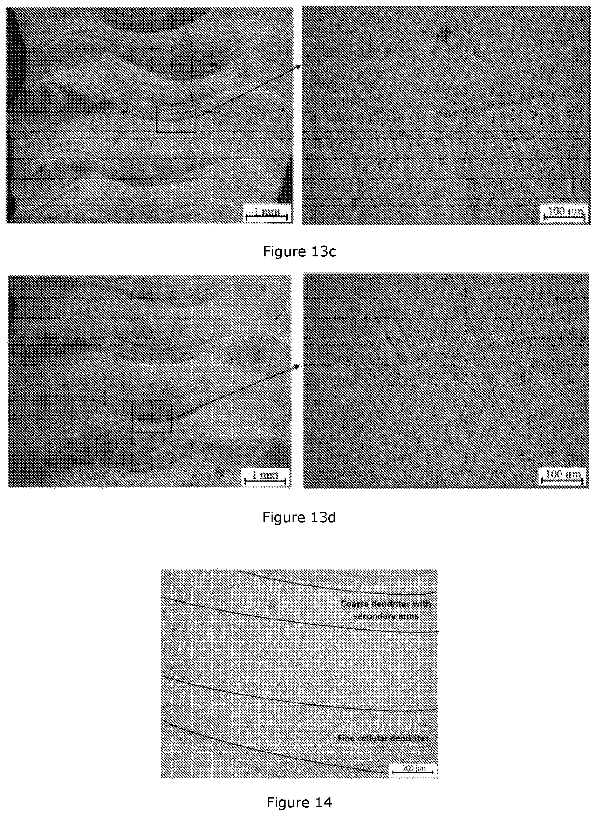

The grain size and morphology are determined by the solidification conditions during the L/S transformation. In non-equilibrium solidification, as observed in AM, the parameters that mostly affect the solidification microstructure are the temperature gradient (G), the solidification rate (R), undercooling ($\Delta$T) and alloy composition [8]. In WAAM of 316L stainless steel, a cellular or columnar dendritic structure is commonly observed, which occurs when G is low and/or R is high [9]. A dendritic structure grows in the opposite direction of the temperature gradient, perpendicular to the isotherms. Optical micrographs depicted in figures 13a, 13b, 13c and 13d of transverse sections of each sample, show this feature, as well as, the presence of $\delta$ ferrite in the interdendritic spaces of primary austenite ($\gamma$) dendrites. The presence of these phases is due to the high cooling rate experienced that shortens the cooling time and limits the diffusion controlled transformation from $\delta$ to $\gamma$ phase [9].

As seen in figure 14, on the as-built sample, each layer presents a fine cellular dendritic structure at the bottom which develops into a coarse dendritic structure with secondary arms near the fusion line at the top of the layer. This grain growth pattern is observed in each layer. In WAAM the cooling rate of each layer decreases from the bottom to the top of the workpiece (8), which promotes a finer microstructure at the bottom of each layer and a coarser one at the top [10] that is refined by the subsequent layer after plastic deformation.

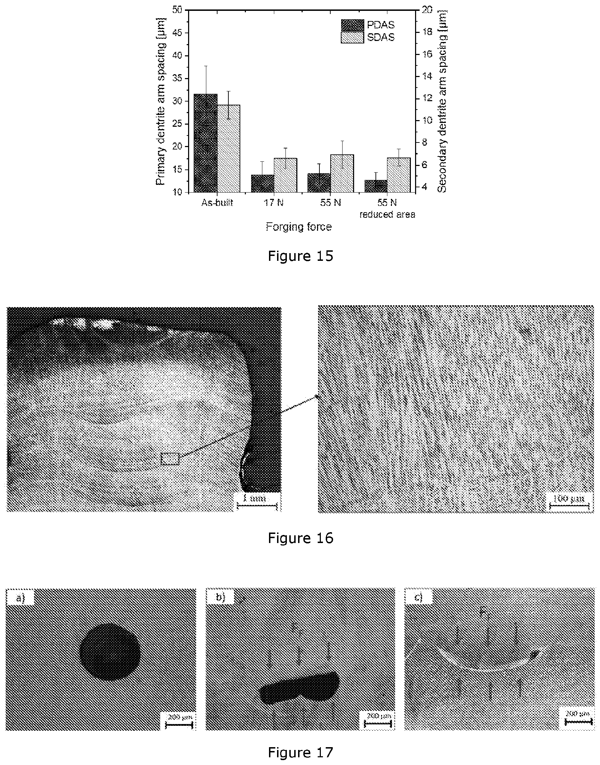

In the hot forged samples, the grain structure was observed to have the same growth pattern with fine cellular dendrites at the bottom and a coarse dendritic structure at the top of each layer. As shown in figure 15, from the comparison of both secondary and primary dendrite arm spacing, (SDAS) and (PDAS), respectively, it is seen that HF-WAAM produced a finer solidification structure with smaller primary and secondary dendrite arm spacing.

In HF-WAAM, grain refinement due to forging causes the presence of more heterogeneous nucleation sites which promotes a competitive grain growth. As a result, upon solidification, more grains form and the grain size of the layer is reduced. It is interesting to notice multiple lines delimitating each layer on the HF-WAAM samples. These are due to the pulsed hammer (7) effect during layer deposition. The plastic deformation induced by the forging form discontinuities in the solidification structure which creates a multiplicity of features that reduce grain size and constitutes barriers to plastic deformation, improving the strength resistance as seen in figure 16.

In the parts manufactured with the hammer (7), as depicted in figure 17, the pores are almost collapsed and are displaced to the periphery, reducing its amount and size with the increase of the forging force. Due to the normal curvature of as-built beads, the central zone is the first to be deformed, so the pores tend to move to the borders. Since most of the WAAM manufactured parts must be machined to the required surface finishing, the subtractive process may allow to eliminate all the porosity located in the lateral subsurface of the part.

With the increase of the forging force, the sphericity of the pores change and these become oval. Moreover, for a forging force of 55 N and with the parallelepiped-hammer, some of the pores were fully collapsed.

References:

[1] T. DebRoy, H.L. Wei, J.S. Zuback, T. Mukherjee, J.W. Elmer, J.O. Milewski, A.M. Beese, A. Wilson-Heid, A. De, W. Zhang, Additive manufacturing of metallic components - Process, structure and properties, Prog. Mater. Sci. 92 (2018) 112-224. doi:10.1016/J.PMATSCI.2017.10.001.
[2] T.A. Rodrigues, V. Duarte, R.M. Miranda, T.G. Santos, J.P. Oliveira, Current Status and Perspectives on Wire and Arc Additive Manufacturing (WAAM), Materials (Basel). 12 (2019) 1121. doi:10.3390/ma12071121.
[3] J. Gu, J. Ding, S.W. Williams, H. Gu, P. Ma, Y. Zhai, The effect of inter-layer cold working and post-deposition heat treatment on porosity in additively manufactured aluminum alloys, J. Mater. Process. Technol. 230 (2016) 26-34. doi:10.1016/J.JMATPROTEC.2015.11.006.
[4] A. Lopez, R. Bacelar, I. Pires, T.G. Santos, J.P. Sousa, L. Quintino, Non-destructive testing application of radiography and ultrasound for wire and arc additive manufacturing, Addit. Manuf. 21 (2018) 298-306. doi:10.1016/J.ADDMA.2018.03.020.
[5] J.P. Sousa, A.B. Lopez, J. Santos, L. Quintino, D. Santos, Phased Array Ultrasonic Testing (PAUT) inspection of Wire and Arc Additive Manufacturing (WAAM) components, n.d. http://www.aendvitoria2019.com/wp-content/uploads/2019/04/ Phased Array Ultrasonic Testing (PAUT) inspection of Wire and Arc Additive Manufacturing (WAAM) components.pdf (accessed June 19, 2019).
[6] P.A. Colegrove, F. Martina, M.J. Roy, B.A. Szost, S. Terzi, S.W. Williams, P.J. Withers, D. Jarvis, High pressure interpass rolling of Wire + Arc Additively Manufactured titanium components, (2014). doi:10.4028/www.scientific.net/AMR.996.694.
[7] M.C. Flemings, Behavior of metal alloys in the semisolid state, Metall. Trans. A. 22 (1991) 957-981. doi:10.1007/BF02661090.
[8] Y. Lee, M. Nordin, S.S. Babu, D.F. Farson, Effect of Fluid Convection on Dendrite Arm Spacing in Laser Deposition, Metall. Mater. Trans. B. 45 (2014) 1520-1529. doi:10.1007/s11663-014-0054-7.
[9] X. Chen, J. Li, X. Cheng, B. He, H. Wang, Z. Huang, Microstructure and mechanical properties of the austenitic stainless steel 316L fabricated by gas metal arc additive manufacturing, Mater. Sci. Eng. A. 703 (2017) 567-577. doi:10.1016/J.MSEA.2017.05.024.
[10] T.A. Rodrigues, V. Duarte, J.A. Avila, T.G. Santos, R.M. Miranda, J.P. Oliveira, Wire and arc additive manufacturing of HSLA steel: Effect of thermal cycles on microstructure and mechanical properties, Addit. Manuf. 27 (2019) 440-450. doi:10.1016/J.ADDMA.2019.03.029.
[11] F. Martina, P.A. Colegrove, S.W. Williams, J. Meyer, Microstructure of Interpass Rolled Wire + Arc Additive Manufacturing Ti-6Al-4V Components, Metall. Mater. Trans. A. 46 (2015) 6103-6118. doi:10.1007/s11661-015-3172-1.

**Claims**

**1.** System for hot forging wire and arc additive manufacturing comprising an additive manufacturing device and a controllable forging treatment tool embedded in the additive manufacturing device,

- the additive manufacturing device comprising, a main conductor (2), a welding tip (6) surrounded by a welding tip shell (6.1), a material conveyor (10) where the wire (1), in use, travels through from the wire feeder (14) through the main conductor (2) to the welding tip (6),
- the controllable forging treatment tool comprising a hammer (7) at least one actuator (3.1), that transmits movement to the hammer (7) through a connector (4) that connects the actuator (3.1) to the hammer (7),

wherein the hammer (7) surrounds the welding tip (6), configured to perform a local viscoplastic deformation of the layers already deposited as the material is being deposited.

**2.** System according to claim 1 wherein the additive manufacturing device further comprises a cooling system (13) and an extractor hood (12).

3. System according to claim 2, wherein the cooling system (13), in the form of a cooling coil, surrounds the welding tip shell (6.1) to cool the welding tip shell (6.1) and the hammer (7).

4. System according to claims 2 or 3, wherein the extractor hood (12) is located at the bottom of the additive manufacturing device, surrounds the additive manufacturing device and is internally divided into multiple channels that are connected to an extractor fan.

5. System according to any of the preceding claims, wherein the controllable forging treatment tool moves jointly with the material conveyor (10) and impacts the deposited layer of the workpiece (8) simultaneously.

6. System according to any of the preceding claims, configured such that the material is in a semi-liquid, viscoplastic or solid state when the impact of the hammer (7) occurs.

7. System according to any of the preceding claims, wherein when the at least one actuator (3.1) is activated, the set consisting of the hammer (7), the cooling system (13), the welding tip shell (6.1), the connector (4) and the at least one actuator (3.1) moves jointly in the vertical direction, describing an alternating upward and downward movements with a stroke less than 0,015 m at a vibration frequency between 1 and 30 Hz.

8. System according to any of the preceding claims, wherein the distance from the hammer (7) to the welding tip (6) is less than 0,03 m.

9. System according to any of the preceding claims, wherein the force that the hammer (7) needs to apply in order to deform the material is less than 200 N.

10. System according to any of the preceding claims, wherein the main conductor (2) is axisymmetric to the welding tip (6) that is placed inside the welding tip shell (6.1).

11. System according to any of the preceding claims, wherein the hammer (7) has a circular crown geometry concentric with the welding tip (2).

12. System according to any of the preceding claims, wherein the hammer (7) is placed on the welding tip shell (6.1).

13. System according to any of the claims 1 to 12, wherein the hammer (7) is placed inside the welding tip shell (6.1).

14. System according to any of the claims 1 to 12, wherein the hammer (7) is placed outside the welding tip shell (6.1).

15. System according to any of the claims 1 to 12, wherein the hammer (7) has a circular crown geometry concentric with the main conductor (2).

**Patentansprüche**

1. System zur additiven Fertigung mittels Warmschmiededraht und Bogen, umfassend eine Vorrichtung zur additiven Fertigung und ein in die Vorrichtung zur additiven Fertigung eingebettetes steuerbares Werkzeug zur Schmiedebehandlung,

- die Vorrichtung zur additiven Fertigung umfasst einen Hauptleiter (2), eine Schweißspitze (6), umgeben von einer Schweißspitzenschale (6.1), einen Materialförderer (10), durch den der verwendete Draht (1) von der Drahtzuführung (14) durch den Hauptleiter (2) zur Schweißspitze (6) wandert,
- das steuerbare Schmiedebearbeitungswerkzeug umfasst einen Hammer (7) und mindestens einen Aktor (3.1), der über ein Verbindungsstück (4), das den Aktor (3.1) mit dem Hammer (7) verbindet, eine Bewegung auf den Hammer (7) überträgt,

wobei der Hammer (7) die Schweißspitze (6) umgibt und so konfiguriert ist, dass er eine lokale viskoplastische Verformung der bereits aufgetragenen Schichten durchführt, während das Material aufgetragen wird.

2. System nach Anspruch 1, wobei die Vorrichtung zur additiven Fertigung ferner ein Kühlsystem (13) und eine Abzugshaube (12) umfasst.

3. System nach Anspruch 2, in dem das Kühlsystem (13) in Form einer Kühlschlange die Schweißspitzenschale (6.1) umgibt, um die Schweißspitzenschale (6.1) und den Hammer (7) zu kühlen.

4. System nach Anspruch 2 oder 3, in dem die Abzugshaube (12) sich an der Unterseite der Vorrichtung zur additiven Fertigung befindet, die Vorrichtung zur additiven Fertigung umgibt und im Inneren in mehrere Kanäle unterteilt ist, die mit einem Abzugsventilator verbunden sind.

5. System nach einem der vorhergehenden Ansprüche, in dem sich das steuerbare Schmiedebearbeitungswerkzeug gemeinsam mit dem Materialförderer (10) bewegt und gleichzeitig auf die aufgebrachte Schicht des Werkstücks (8) einwirkt.

6. System nach einem der vorhergehenden Ansprüche, das so konfiguriert ist, dass sich das Material in einem halbflüssigen, viskoplastischen oder festen Zustand befindet, wenn der Hammerschlag (7) erfolgt.

7. System nach einem der vorhergehenden Ansprüche, in dem sich bei Aktivierung des zumindest einen Aktors (3.1) die Gruppe, bestehend aus Hammer (7), Kühlsystem (13), Schweißspitzenschale (6.1), Verbinder (4) und zumindest einem Aktor (3.1), gemeinsam in vertikaler Richtung bewegt und dabei eine abwechselnde Aufwärts- und Abwärtsbewegung mit einem Hub von weniger als 0,015 m bei einer Vibrationsfrequenz zwischen 1 und 30 Hz ausführt.

8. System nach einem der vorhergehenden Ansprüche, in dem der Abstand zwischen dem Hammer (7) und der Schweißspitze (6) weniger als 0,03 m beträgt.

9. System nach einem der vorhergehenden Ansprüche, wobei die Kraft, die der Hammer (7) aufbringen muss, um das Material zu verformen, weniger als 200 N beträgt.

10. System nach einem der vorhergehenden Ansprüche, wobei der Hauptleiter (2) achsensymmetrisch zur Schweißspitze (6) ausgerichtet ist, die im Inneren der Schweißspitzenschale (6.1) angebracht ist.

11. System nach einem der vorhergehenden Ansprüche, in dem der Hammer (7) eine kreisförmige, zur Schweißspitze (2) konzentrische Kronengeometrie aufweist.

12. System nach einem der vorhergehenden Ansprüche, in dem der Hammer (7) auf der Schweißspitzenschale (6.1) angebracht ist.

13. System nach einem der Ansprüche 1 bis 12, in dem der Hammer (7) im Inneren der Schweißspitzenschale (6.1) angebracht ist.

14. System nach einem der Ansprüche 1 bis 12, in dem der Hammer (7) außerhalb der Schweißspitzenschale (6.1) angebracht ist.

15. System nach einem der Ansprüche 1 bis 12, in dem der Hammer (7) eine kreisförmige, zum Hauptleiter (2) konzentrische Kronengeometrie aufweist.

**Revendications**

1. Un système de fabrication additive par forgeage à chaud de fils et d'arcs comprenant un dispositif de fabrication additive et un outil de traitement de forgeage contrôlable intégré dans le dispositif de fabrication additive,

   - le dispositif de fabrication additive comprenant un conducteur principal (2), une pointe de soudage (6) entourée d'une enveloppe de pointe de soudage (6.1), un convoyeur de matériau (10) où le fil (1), en cours d'utilisation, passe du dévidoir de fil (14) à la pointe de soudage (6) en passant par le conducteur principal (2),
   - l'outil de traitement de forgeage contrôlable comprenant un marteau (7) et au moins un actionneur (3.1), qui transmet le mouvement au marteau (7) par l'intermédiaire d'un connecteur (4) qui relie l'actionneur (3.1) au marteau (7),

dans lequel le marteau (7) entoure la pointe de soudage (6), configuré pour effectuer une déformation viscoplastique locale des couches déjà déposées au fur et à mesure que le matériau est déposé.

2. Le système selon la revendication 1, dans lequel le dispositif de fabrication additive comprend en outre un système de refroidissement (13) et une hotte d'aspiration (12).

3. Le système selon la revendication 2, dans lequel le système de refroidissement (13), sous la forme d'un serpentin de refroidissement, entoure l'enveloppe de pointe de soudage (6.1) pour refroidir l'enveloppe de pointe de soudage (6.1) et le marteau (7).

4. Le système selon la revendication 2 ou 3, dans lequel la hotte d'aspiration (12) est située au bas du dispositif de fabrication additive, entoure le dispositif de fabrication additive et est divisée intérieurement en plusieurs canaux qui sont reliés à un ventilateur d'extraction.

5. Le système selon l'une quelconque des revendications précédentes, dans lequel l'outil de traitement de forgeage contrôlable se déplace conjointement avec le convoyeur de matériau (10) et percute simultanémentla couche déposée de la pièce à usiner (8).

6. Le système selon l'une quelconque des revendications précédentes, configuré de telle sorte que le matériau soit dans un état semi-liquide, viscoplastique ou solide au moment de l'impact par le marteau (7).

7. Le système selon l'une quelconque des revendications précédentes, dans lequel, lorsque au moins un actionneur (3.1) est activé, l'ensemble composé du marteau (7), du système de refroidissement (13), de l'enveloppe de pointe de soudage (6.1), du connecteur (4) et d'au moins un actionneur (3.1) se déplace conjointement dans la direction verticale, en décrivant des mouvements alternatifs vers le haut et vers le bas avec une course inférieure à 0,015 m à une fréquence de vibration comprise entre 1 et 30 Hz.

8. Le système selon l'une quelconque des revendications précédentes, dans lequel la distance entre le marteau (7) et la pointe de soudage (6) est inférieure à 0,03 m.

9. Le système selon l'une quelconque des revendications précédentes, dans lequel la force que le marteau (7) doit appliquer pour déformer le matériau est inférieure à 200 N.

10. Le système selon l'une quelconque des revendications précédentes, dans lequel le conducteur principal (2) est axisymétrique à la pointe de soudage (6) située dans l'enveloppe de pointe de soudage (6.1).

11. Le système selon l'une quelconque des revendications précédentes, dans lequel le marteau (7) a une géométrie de couronne circulaire concentrique avec la pointe de soudage (2).

12. Le système selon l'une quelconque des revendications précédentes, dans lequel le marteau (7) est placé sur l'enveloppe de pointe de soudage (6.1).

13. Le système selon l'une quelconque des revendications 1 à 12, dans lequel le marteau (7) est placé à l'intérieur de l'enveloppe de pointe de soudage (6.1).

14. Le système selon l'une quelconque des revendications 1 à 12, dans lequel le marteau (7) est placé à l'extérieur de l'enveloppe de pointe de soudage (6.1).

15. Le système selon l'une quelconque des revendications 1 à 12, dans lequel le marteau (7) a une géométrie de couronne circulaire concentrique avec le conducteur principal (2).

Figure 1

Figure 2

Figure 3

Figure 4

Figure 5

Figure 6

Figure 7

Figure 8

Figure 9

Figure 10

As-built sample

With 17 N cylinder-shaped hammer   With 55 N cylinder-shaped hammer   With 55 N parallelepiped-shaped hammer

Figure 11

Figure 12

Figure 13a

Figure 13b

Figure 13c

Figure 13d

Figure 14

Figure 15

Figure 16

Figure 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016092253 A
- WO 2019084430 A
- EP 3266543 A

### Non-patent literature cited in the description

- **T. DEBROY ; H.L. WEI ; J.S. ZUBACK ; T. MUKHERJEE ; J.W. ELMER ; J.O. MILEWSKI ; A.M. BEESE ; A. WILSON-HEID ; A. DE ; W. ZHANG.** Additive manufacturing of metallic components - Process, structure and properties. *Prog. Mater. Sci.,* 2018, vol. 92, 112-224
- **T.A. RODRIGUES ; V. DUARTE ; R.M. MIRANDA ; T.G. SANTOS ; J.P. OLIVEIRA.** Current Status and Perspectives on Wire and Arc Additive Manufacturing (WAAM). *Materials (Basel),* 2019, vol. 12, 1121
- **J. GU ; J. DING ; S.W. WILLIAMS ; H. GU ; P. MA ; Y. ZHAI.** The effect of inter-layer cold working and post-deposition heat treatment on porosity in additively manufactured aluminum alloys. *J. Mater. Process. Technol.,* 2016, vol. 230, 26-34
- **A. LOPEZ ; R. BACELAR ; I. PIRES ; T.G. SANTOS ; J.P. SOUSA ; L. QUINTINO.** Non-destructive testing application of radiography and ultrasound for wire and arc additive manufacturing. *Addit. Manuf.,* 2018, vol. 21, 298-306
- **J.P. SOUSA ; A.B. LOPEZ ; J. SANTOS ; L. QUINTINO ; D. SANTOS.** Phased Array Ultrasonic Testing (PAUT) inspection of Wire and Arc Additive Manufacturing (WAAM) components. *Phased Array Ultrasonic Testing (PAUT) inspection of Wire and Arc Additive Manufacturing (WAAM) components.pdf,* 19 June 2019, http://www.aendvitoria2019.com/wp-content /uploads/2019/04
- **P.A. COLEGROVE ; F. MARTINA ; M.J. ROY ; B.A. SZOST ; S. TERZI ; S.W. WILLIAMS ; P.J. WITHERS ; D. JARVIS.** *High pressure interpass rolling of Wire + Arc Additively Manufactured titanium components,* 2014
- **M.C. FLEMINGS.** Behavior of metal alloys in the semisolid state. *Metall. Trans. A.,* 1991, vol. 22, 957-981
- **Y. LEE ; M. NORDIN ; S.S. BABU ; D.F. FARSON.** Effect of Fluid Convection on Dendrite Arm Spacing in Laser Deposition. *Metall. Mater. Trans. B.,* 2014, vol. 45, 1520-1529
- **X. CHEN ; J. LI ; X. CHENG ; B. HE ; H. WANG ; Z. HUANG.** Microstructure and mechanical properties of the austenitic stainless steel 316L fabricated by gas metal arc additive manufacturing. *Mater. Sci. Eng. A.,* 2017, vol. 703, 567-577
- **T.A. RODRIGUES ; V. DUARTE ; J.A. AVILA ; T.G. SANTOS ; R.M. MIRANDA ; J.P. OLIVEIRA.** Wire and arc additive manufacturing of HSLA steel: Effect of thermal cycles on microstructure and mechanical properties. *Addit. Manuf.,* 2019, vol. 27, 440-450
- **F. MARTINA ; P.A. COLEGROVE ; S.W. WILLIAMS ; J. MEYER.** Microstructure of Interpass Rolled Wire + Arc Additive Manufacturing Ti-6Al-4V Components. *Metall. Mater. Trans. A.,* 2015, vol. 46, 6103-6118